# EUROPÄISCHE PATENTSCHRIFT

(11) **EP 2 714 470 B1**
(45) Veröffentlichungstag und Bekanntmachung des Hinweises auf die Patenterteilung: **16.11.2016**
(21) Anmeldenummer: 12722377.4
(22) Anmeldetag: 21.05.2012
(51) Int. Cl.: B60R 1/072, B29C 45/14, B29L 31/30

(54) **BAUGRUPPE ZUR VERSTELLUNG DES AUSSENSPIEGELS**
ASSEMBLY FOR ADJUSTING THE OUTSIDE MIRROR
MODULE PERMETTANT DE RÉGLER UN RÉTROVISEUR EXTÉRIEUR

(30) Priorität: 31.05.2011 DE 102011103198
(43) Veröffentlichungstag der Anmeldung: 09.04.2014
(73) Patentinhaber: SMR Patents S.à.r.l., 1653 Luxembourg (LU)
(72) Erfinder: HERRMANN, Andreas, 71364 Winnenden-Baach (DE)
(74) Vertreter: Weber-Bruls, Dorothée
(86) Internationale Anmeldenummer: PCT/EP2012/059396
(87) Internationale Veröffentlichungsnummer: WO 2012/163717

(56) Entgegenhaltungen:
- EP-A1- 2 208 643
- DE-A1- 3 120 627
- DE-A1-102009 022 238

## Beschreibung

Die Erfindung betrifft einen Fahrzeug-Außenspiegel, genauer gesagt eine Verstellbaugruppe für einen solchen Außenspiegel nach dem Oberbegriff von Anspruch 1, sowie ein Verfahren zur Herstellung einer Verstellbaugruppe für den Außenspiegel.

Fahrzeug-Außenspiegel weisen im zunehmenden Maße elektrische Glasverstellungen auf. Dabei werden Glasaktuatoren in einem Einbaugehäuse als eigenständige Bauteile verwendet. Diese Glasaktuatoren enthalten zwei Motoren, die Verstellsysteme antreiben. Alternativ dazu werden zwei getrennte Antriebe verwendet.

Bei bekannten elektrisch betätigbaren Fahrzeug-Außenspiegeln ist an einem am Fahrzeug angebrachten Gehäuse ein Spiegelträger kippbar gelagert, und zwei elektrische Antriebsmotoren sind mit dem Spiegelträger gekoppelt. Die Antriebsmotoren sind bezüglich des Drehpunkts um 90° versetzt an den Spiegelträger gekoppelt. Sie sind als Dreh-Elektromotoren ausgebildet und bewegen den Spiegel über ein Getriebe und Zahnstangen sowie am Spiegelträger angebrachte Gegenstücke. Grundsätzlich kann man die Kippbewegung mit einem einzigen Motor realisieren, wobei hierzu jedoch der mechanische Aufwand erhöht ist. Eine einfache Konstruktion ist mit zwei Motoren möglich. Aber auch bei Verwendung von zwei Dreh-Elektromotoren ist der Montageaufwand aufgrund der vielen Einzelteile (Motoren, Getriebe, Zahnstangen etc.) erheblich. So ist bspw. aus der DE 31 20 627 A1 ein Außenspiegel bekannt, bei dem ein Spiegelscheibenhalter auf einem Kugelzapfen verstellbar gelagert ist und mit dem Spiegelscheibenhalter je über einen Hebel zwei Stellmotoren verbunden sind, wobei jeder Stellmotor mit einem Untersetzungsgetriebe versehen und mit dem Spiegelscheibenhalter über eine Pleulstangengetriebe verbunden ist.

Aus der DE 40 18 409 A1 ist eine gattungsgemäße Verstellbaugruppe mit einer Anordnung bekannt, die angelenkte Linearantriebe zur Verstellung des Spiegelglases beschreibt. Die Lösung verwendet in Kugellagern gelagerte Läuferstangen und elektrische Linearantriebe zur Einstellung des Spiegels.

Aus der WO 2005/095159 A1 ist eine nicht gattungsgemäße Verstellbaugruppe ohne lineare Verstellmotoren bekannt, bei der zwischen einem Aktuator und einem Spiegelträger Spiegelhalterungen zum Einsatz kommen, um Vibrationen zu absorbieren und zu stabilisieren. Zu diesem Zwecke umfasst jede Spiegelhalterung einen Isolator und einen oder mehrere Bolzen.

Eine Verstellvorrichtung für einen Außenspiegel, die drei Piezoaktoren aufweist, ist aus der EP 2 208 643 A1 bekannt.

Ein Verfahren zur Herstellung einer Verstellgruppe ist bekannt aus der WO 03/004245 A1. Genauer gesagt betrifft das bekannt Verfahren die Herstellung von optisch hochwertigem transparenten Kunststoff zur Verwendung als Spiegel- oder Glasersatz.

Die DE 10 2009 022 238 A1 betrifft ein Verfahren zur Herstellung von Kunststoff-Formteilen mit einer integrierten Leiterbahn, insbesondere zur Weiterverarbeitung zu einem elektrisch beheizbaren Spiegel.

Der Erfindung liegt die Aufgabe zugrunde, einen elektrisch betätigbaren Fahrzeug-Außenspiegel der eingangs genannten Art anzugeben, der einen mechanisch einfachen Aufbau besitzt und sich auch kostengünstig herstellen lässt. Genauer gesagt ist es die Aufgabe, die gattungsgemäße Verstellbaugruppe derart weiterzuentwickeln, dass ein mechanisch einfacher Aufbau entsteht und die Herstellung kostengünstig ist.

Diese Aufgabe wird erfindungsgemäß dadurch gelöst, dass die Antriebsmotoren als angespritzte elektrische Linearmotoren ausgebildet sind und dass die Ansteuerung der Linearmotoren über einen im Außenspiegel befindlichen Controller erfolgt.

Im Folgenden werden Ausführungsbeispiele der Erfindung anhand der Zeichnung näher erläutert. Es zeigen:
- Fig. 1: einen Außenspiegel in Explosivdarstellung;
- Fig. 2: eine Ausführungsform mit Linearantrieben nach dem Stand der Technik;
- Fig. 3: eine Ausführungsform der erfindungsgemäßen Verstellbaugruppe.

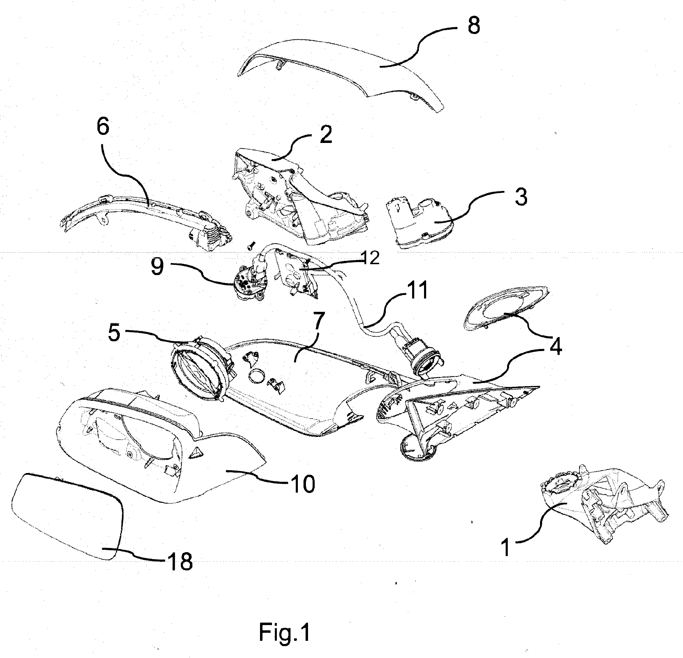

Die Erfindung soll nachstehend für einen Kraftfahrzeug-Außenspiegel beschrieben werden. Fig. 1 zeigt eine Außenspiegelanordnung, wie sie im Stand der Technik verwendet wird. Der Außenspiegel besteht aus einem Spiegelkopf und einem Spiegelfuß 1, wobei der Spiegelkopf drehbar gegenüber dem Spiegelfuß 1 gelagert ist. In Figur 1 ist der Spiegelfuß 1 mit einer Drehachse 3 und über die Drehachse 3 mit einem Spiegelträger 2 im Spiegelkopf verbunden. Diese Bauteile werden aus Metall oder aus Kunststoff oder aus einer Kombination von beiden Materialien hergestellt und bilden die tragende Konstruktion des Außenspiegels.

Der Spiegelfuß 1 wird am Fahrzeug befestigt. Er wird von Kunststoffbauteilen, den Spiegelfußabdeckungen 4, verkleidet.

Auf dem Spiegelträger 2 wird ein Glasantrieb 5 befestigt, der wiederum mit einer Glasbaugruppe 18 verbunden ist. Die Glasbaugruppe 18 besteht dabei aus einem konventionellen Glasspiegel mit einer Glasträgerplatte aus Kunststoff, die das Glas schützt und trägt und die Verbindung zum Glasantrieb 5 herstellt. Die Glasbaugruppe 18 kann aber auch in einer vorteilhaften Ausgestaltung ein sogenanntes Plastikglas sein, also ein Spiegelglas aus einem beschichteten Kunststoffsubstrat, mit einer reflektierenden Seite und einer Trägerseite, in die Befestigungsmittel für einen Glasantrieb 5 integriert sind. Der Spiegelkopf wird von Spiegelkopfgehäuseteilen 7, 8 und 10 verkleidet. Im Beispiel der Figur 1 ist auch ein Blinkermodul 6 in die Spiegelkopfgehäuseteile 7, 8 und 10 integriert. Eine Ansteuerung 9 für den Glasantrieb 5 ist mit einem Controller 12 verbunden, der wiederum eine Verbindung 11 zum Fahrzeug aufweist.

Der Glasantrieb 5 als eigenständige Baugruppe enthält zwei Motoren, die an Zahnstangen angreifen, deren Enden an der Glasbaugruppe 18 befestigt sind und so das Spiegelglas verschwenken können. Die Glasantriebe 5 werden in geeigneten Gehäusen als komplette Einheit geliefert.

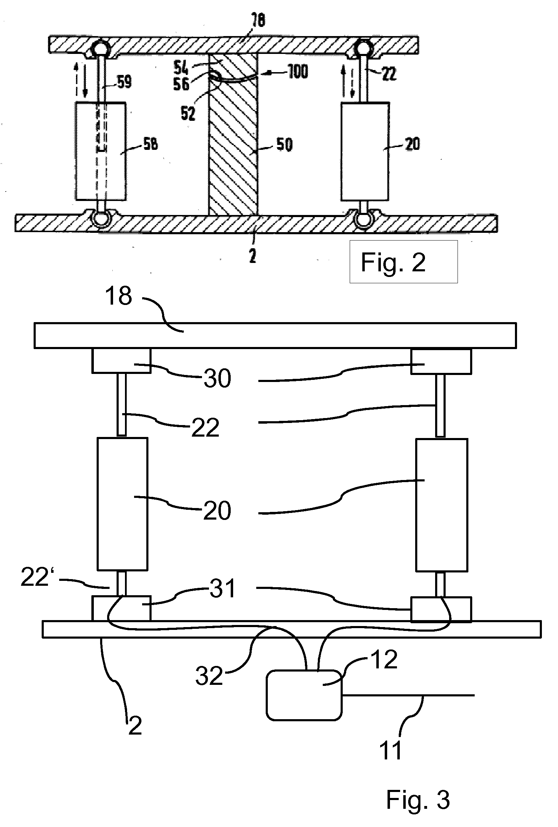

Alternativ dazu zeigt Figur 2 eine Verstellbaugruppe mit getrennten Antrieben.

Gemäß Fig. 2 ist zwischen der Glasbaugruppe 18 und dem Spiegelträger 2 ein Kipplager 100 angebracht, welches eine Stütze 50 am Spiegelträger 2 und einen Block 54 auf der Rückseite der Glasbaugruppe 18 aufweist. Die Stütze 50 besitzt eine konkave Lagerschale 52, in der eine konvexe Lagerfläche 56 des Blocks 54 aufgenommen ist. Rechts in Fig. 2 ist ein linearer Verstellmotor 20 dargestellt. Er ist mit einem Ende gelenkig in einer Ausnehmung des Spiegelträgers 2 gelagert. Der Läufer 22 ist über eine gelenkige Verbindung in Form eines Kugelgelenks mit der Rückseite der Glasbaugruppe 18 gekoppelt.

Durch die Lagerelemente 52, 56 wird ein Drehpunkt M definiert. Spiegelbildlich bezüglich dieses Drehpunkts M ist auf der dem linearen Verstellmotor 20 gegenüberliegenden Seite ein Reibungselement 58 angeordnet, welches ähnlich gelagert ist wie der lineare Verstellmotor 20. Durch das zylindrische Reibungselement 58 wird zwischen dessen Achse 59 und dem die Achse 59 umgebenden Körper eine bestimmte Haftreibung und eine bestimmte Gleitreibung definiert.

Wenn der lineare Verstellmotor 20 den Läufer 22 in Richtung des durchgehenden Pfeils bewegt, kippt der Spiegelträger um das Kipplager 100 im Gegenuhrzeigersinn, wobei die Achse 59 in Richtung des ausgezogenen Pfeils in das Reibungselement 58 eintaucht. Wird der Läufer 22 zurückgezogen, kippt der Spiegelträger 18 im Uhrzeigersinn, wobei dann der Läufer 22 und die Achse 59 des Reibungselements 58 in Richtung der gestrichelten Pfeile bewegt werden.

Die in Fig. 2 dargestellte Anordnung ist in ähnlicher Weise für die andere Kippachse vorhanden, d. h. bei Betrachtung der Anordnung nach Fig. 2 aus einer 90° versetzten Blickrichtung ergibt sich ein ähnliches Bild.

Diese Lösung des Standes der Technik setzt aufwendige Reibungselemente zusätzlich zum linearen Verstellmotor 20 voraus.

Figur 3 zeigt eine erfindungsgemäße Verstellbaugruppe. Auf die Darstellung des Kipplagers wurde dabei verzichtet. Für die Ausführung der Erfindung ist jedes Lager geeignet, das einen Bewegungsmittelpunkt zwischen Glasbaugruppe und Spiegelträger definiert. Hier kann der Fachmann jede ihm geläufige Lösung einsetzen.

Die Glasbaugruppe 18 ist somit über ein nicht dargestelltes Lager und zwei lineare Verstellmotoren 20 mit dem Spiegelträger 2 verbunden.

Der lineare Verstellmotor 20 mit einem Läufer 22 wird endseitig mit einem elastomeren Verbindungsstück 31 versehen. Der Läufer 22 ist weiterhin an seinem anderen Ende mit einem weiteren elastomeren Verbindungsstück 30 verbunden, das mit der Glasbaugruppe 18 in Verbindung steht. Eine elektrische Verbindung 32 geht vom linearen Verstellmotor 20 zu einem Controller 12, der über einen Verbindung 11 zum Fahrzeug verfügt.

Die zwei gezeigten Antriebe sind so versetzt angeordnet, dass durch Ansteuerung der linearen Verlängerung oder Verkürzung des Läufers 22, 22' jede gewünschte Positionierung der Glasbaugruppe 18 erfolgen kann.

Vorzugsweise werden lineare Verstellmotoren mit Piezomotoren eingesetzt. Diese ersetzen die klassischen Antriebssysteme wie Motor Spindel- Systeme oder magnetische Linearantriebe. Die Piezoversteller bestehen aus einem Läufer, der von Piezomotoren vorgespannt wird. Mit den Piezoverstellern lassen sich sehr kompakte Bauformen erzielen, wobei die schnelle Verstellbarkeit ein Vorteil ist. Weiterhin weisen Piezoversteller ein hohes Maß an Selbsthemmung auf, so dass beim Einsatz als Spiegelglasversteller, die Glasbaugruppe 18 sicher gelagert und arretiert ist. Zusätzliche Arretierungen fallen weg.

Besonders vorteilhaft ist die erfindungsgemäße Ausführungsform, wenn die Glasbaugruppe 18 kein Spiegelglas aus Mineralglas enthält, sondern aus mit einer metallischen Schicht bedampftem Plastiksubstrat gebildet wird. Hierzu wird ein Plastiksubstrat mit hoher optischer Qualität hergestellt und einen metallische Schicht, beispielsweise Chrom, Aluminium oder Titan oder eine Mischung mit einem geeigneten Verfahren auf einer oder beiden Oberflächen des Kunststoffsubstrats abgeschieden. Plastikspiegel sind gegenüber konventionellen Glasspiegeln um Größenordnungen leichter. Sie können einfach von den Glasverstellern geführt werden, und die Piezoversteller müssen auch nicht mehr für große Verstellkräfte ausgelegt sein, was die gesamte Konstruktion leichter und kostengünstiger macht.

Die Verstellbaugruppe besteht aus der Glasbaugruppe 18, zwei linearen Verstellmotoren 20 sowie den Verbindungsstücken 31 und 30 zum Spiegelträger und zur Glasbaugruppe 18.

Die Herstellung der Verstellbaugruppe erfolgt in einem Kunststoffspritzverfahren. Als erster Schritt erhält der lineare Verstellmotor 20 auf der Seite, die anschließend mit dem Spiegelträger verbunden werden muss, ein elastomeres Verbindungsmittel 31. Dieses kann direkt angespritzt werden.

Es ist auch möglich das Verbindungsmittel 31 aufzustecken.

In einem weiteren Schritt wird für die Glasbaugruppe 18 entweder ein Plastikspiegel hergestellt oder eine Glasträgerplatte gespritzt. Für den Plastikspiegel wird das Substrat in einem speziellen Spritzgussverfahren, das in der EP 1 412 158 A0 beschreiben ist, hergestellt. Das Verbindungselement 30 wird dann in einem weiteren Spritzgussschritt direkt auf das Plastiksubstrat angespritzt, nachdem der lineare Verstellmotor 20 mit seinem Läufer 22 in das Werkzeug eingelegt wurde. Der lineare Verstellmotor 20 mit seinem Läufer wird dabei in einem definierten Abstand vom Kunststoffsubstrat oder der Trägerplatten das zweite Spritzgusswerkzeug eingelegt, sodass der Abstand beim Umspritzen mit dem elastomeren Material ausgefüllt und die beiden Bauteile verbunden werden. Damit wird der Läufer 22 direkt an das Plastiksubstrat des Plastikspiegels form- und kraftschlüssig angespritzt. Dadurch dass der lineare Verstellmotor 20 direkt mit der Glasbaugruppe 18 verbunden ist, werden Montageaufwendungen eingespart. Das Verbindungsstück 30 ist aus einem elastomeren Material, so dass sich der Winkel zwischen Glasbaugruppe 18 und dem Läufer 22 den Verstellkräften bis zu einer vom Elastizitätskoeffizienten des Materials bestimmten Schwelle anpassen kann.

Das Kunststoffspritzverfahren ist entweder ein 2K Verfahren in einer Spritzgussmaschine, wobei die Herstellung in zwei Werkzeugen und mit zwei Materialien erfolgt, oder die Trägerplatte oder der Plastikspiegel werden in einem getrennten Prozess gefertigt und in einer zweiten Kunststoffspritzmaschinen eingelegt um dort mit den Verbindungsstücken versehen zu werden.

Insbesondere bei der Verwendung von Plastikspiegeln ist es sinnvoll, den beschichtungsschritt vor dem Anspritzen des Verbindungsstücks mit den Linearverstellern durchzuführen.

Die Montage der Bauteile bestehend aus Glasbaugruppe 18 und linearen Verstellmotoren erfolgt über die Verbindungsstücke 31, die in geeignete Vorrichtungen des Spiegelträgers 2 eingeklipst oder auf sonstige Weise befestigt werden. Das Lager ist daher auch so gestaltet, dass mit der Verbindung der linearen Verstellmotoren 20 die Lagerbauteile verbunden sind.

Zum Verstellen des Spiegels werden beide lineare Verstellmotoren 20 angesteuert. Die Ansteuerung erfolgt über eine Kontaktierung und eine Verbindung zu einem Controller 12. Solche Controller 12 im Außenspiegel werden verwendet, um alle im Außenspiegel vorhandenen elektrischen Funktionen anzusteuern. Vorteilhafterweise werden die Kontrollfunktionen von einem Controller 12 ausgeführt, der als LIN Bus Knoten eingesetzt ist. Damit ist der Controller 12 über die Busverbindung direkt mit dem Fahrzeugbus und dessen Knoten verbunden.
Durch den Einsatz eines Controllers 12 lässt sich das System aus zwei linearer Verstellmotoren 20 so ansteuern dass die beiden linearen Verstellmotoren 20 nicht getrennt voneinander, sondern abgestimmt zueinander bewegt werden. Dadurch lassen sich größere Verkippungen der Läuferachse und die dadurch entstehenden Belastung der elastomeren Verbindungsstücke durch Scherkräfte vermeiden.

## Patentansprüche

1. Verstellbaugruppe für die Verstellung der reflektierenden Fläche einer Glasbaugruppe (18) in einem Fahrzeug-Außenspiegel, wobei
zwei Verstellmotoren (20) an zwei Punkte der Glasbaugruppe (18) angreifen und zwischen der Glasbaugruppe (18) sowie einem Spiegelträger (2) im Spiegelkopf gelagert sind,
**dadurch gekennzeichnet, dass**
die Verstellmotoren (20) lineare Verstellmotoren (20) sind, die Läufer (22, 22') aufweisen, die Läufer (22, 22') über mindestens ein elastomeres Verbindungsstück (30, 31) mit der Glasbaugruppe (18) und/oder dem Spiegelträger (2) verbunden sind, und
die Läufer (22, 22') mit dem mindestens einen elastomeren Verbindungsstück (30, 31) umspritzt sind.

2. Verstellbaugruppe nach Anspruch 1, **dadurch gekennzeichnet, dass** die Verstellmotoren (20) Piezoantriebe sind.

3. Verstellbaugruppe nach Anspruch 1, **dadurch gekennzeichnet, dass** die Verstellmotoren (20) über einen im Fahrzeug-Außenspiegel eingebauten Controller (12) angesteuert werden.

4. Verstellbaugruppe nach Anspruch 3 **dadurch gekennzeichnet, dass**
der Controller (12) Teil eines Fahrzeugbussystems (11) ist.

5. Verstellbaugruppe nach Anspruch 1, **dadurch gekennzeichnet, dass** die Glasbaugruppe ein Plastiksubstrat mit einer reflektierenden Schicht ist.

6. Verstellbaugruppe nach Anspruch 1, **dadurch gekennzeichnet, dass** die Glasbaugruppe (18) eine Kunststoff-Trägerplatte mit einem mineralischen Spiegelglas ist.

7. Verfahren zur Herstellung einer Verstellbaugruppe nach einem der vorhergehenden Ansprüche mit den folgenden Schritten:
Kunststoffspritzen einer Kunststoffträgerplatte oder eines Kunststoff-Spiegelsubstrats in einem ersten Spritzwerkzeug zur Herstellung mindestens eines Teiles der Glasbaugruppe (18),
Einlegen der Verstellmotoren (20) in ein zweites Spritzgusswerkzeug mit definiertem Abstand zu mindestens einem Teil der Glasbaugruppe (18), und
Anspritzen der Läufer (22, 22') der Verstellmotoren (20) mit einem elastomeren Kunststoff an die Glasbaugruppe (18) in dem zweiten Spritzgusswerkzeug.

## Claims

1. An adjustment assembly for adjusting the reflective surface of a glass assembly (18) in a vehicle outside mirror, wherein
two adjustment motors (20) engage with two points of the glass assembly (18) and are mounted between the glass assembly (18) and a mirror carrier (2) in a mirror head, **characterised in that**
the adjustment motors (20) are linear adjustment motors (20), having rotors (22, 22'), the rotors (22, 22') are connected to the glass assembly (18) and/or the mirror carrier (2) via at least one elastomeric connecting piece (30, 31), and the rotors (22, 22') are over-moulded with the at least one elastomeric connecting piece (30, 31).

2. The adjustment assembly according to claim 1, **characterised in that** the adjustment motors (20) are piezo drives.

3. The adjustment assembly according to claim 1, **characterised in that** the adjustment motors (20) are controlled by a controller (12) incorporated into the vehicle outside mirror.

4. The adjustment assembly according to claim 3, **characterised in that** the controller (12) is part of a vehicle bus system (11).

5. The adjustment assembly according to claim 1, **characterised in that** the glass assembly is a plastic substrate with a reflective coating.

6. The adjustment assembly according to claim 1, **characterised in that** the glass assembly (18) is a plastic carrier plate with a mineral glass mirror.

7. A method for producing an adjustment assembly according to any one of the preceding claims comprising the following steps:
plastic injection moulding of a plastic carrier plate or a plastic mirror substrate in a first injection moulding tool to produce at least a part of the glass assembly (18),
inserting the adjustment motors (20) in a second injection moulding tool at a defined distance from at least a part of the glass assembly (18), and
moulding the rotors (22, 22') of the adjustment motors (20) with an elastomeric plastic to the glass assembly (18) in the second injection moulding tool.

## Revendications

1. Module de réglage permettant de régler la surface réfléchissante d'un module en verre (18) dans un rétroviseur extérieur de véhicule,
deux servomoteurs (20) agissant sur deux points du module en verre (18) et étant située entre le module en verre (18) et un porte-miroir (2) dans une tête du miroir,
**caractérisé en ce que**
les servomoteurs (20) sont des servomoteurs (20) linéaires qui ont des coulisseaux linéaire (22, 22'),
les coulisseaux linéaire (22, 22') sont raccordées au module en verre (18) et/ou au porte-miroir (2) par au moins une pièce de raccordement (30, 31) en élastomère, et
les coulisseaux linéaire (22, 22') sont surmoulés avec l'au moins une pièce de raccordement (30, 31) en élastomère.

2. Module de réglage selon la revendication 1, **caractérisé en ce que** les servomoteurs (20) sont des entraînements piézoélectriques.

3. Module de réglage selon la revendication 1, **caractérisé en ce que** les servomoteurs (20) sont commandés par un contrôleur (12) intégré dans le rétroviseur extérieur de véhicule.

4. Module de réglage selon la revendication 3, **caractérisé en ce que** le contrôleur (12) fait partie d'un système bus du véhicule (11).

5. Module de réglage selon la revendication 1, **caractérisé en ce que** le module en verre est un substrat en plastique avec une couche réfléchissante.

6. Module de réglage selon la revendication 1, **caractérisé en ce que** le module en verre (18) est une plaque support en matière plastique avec un verre miroir minéral.

7. Procédé pour fabrication d'un module de réglage selon l'une quelconque des revendications précédentes, avec les étapes suivantes:
injection plastique d'une plaque support en matière plastique ou d'un substrat de miroir en matière plastique dans un premier outil de moulage par injection pour la fabrication d'au moins une partie du module en verre (18),
insertion des servomoteurs (20) dans un deuxième outil de moulage par injection avec une distance définie par rapport à au moins une partie du module en verre (18), et
injection des coulisseaux linéaire (22, 22') des servomoteurs (20) avec une matière plastique élastomère sur le module en verre (18) dans le deuxième outil de moulage par injection.
